# EUROPEAN PATENT SPECIFICATION

(11) **EP 2 603 724 B1**
(45) Date of publication and mention of the grant of the patent: **10.08.2016**
(21) Application number: 11817127.1
(22) Date of filing: 12.08.2011
(51) Int. Cl.: F16L 25/00, B25B 27/10, F16L 5/00, F16L 13/14, F16L 19/04, F16L 25/03, F16L 41/02, F24F 1/26

(54) **WELDLESS ALUMINUM BASED HVAC SYSTEM**
HVAC-SYSTEM AUF BASIS VON UNGESCHWEISSTEM ALUMINIUM
SYSTÈME DE CVCA À BASE D'ALUMINIUM SANS SOUDURE

(30) Priority: 13.08.2010 US 373754 P; 17.01.2011 US 201161433469 P; 06.12.2010 US 420146 P; 21.12.2010 US 201061425595 P
(43) Date of publication of application: 19.06.2013
(73) Proprietor: Reflok, Inc., Bosie, ID 83714 (US)
(72) Inventor: PETTERSON, Bart, Boise, ID 83714 (US); SHIPMAN, Jon, Dursley Gloucestershire GL11 6AQ (GB)
(74) Representative: Emerson, Peter James
(86) International application number: PCT/US2011/047630
(87) International publication number: WO 2012/021833

(56) References cited:
- WO-A1-2005/059424
- DE-A1- 3 808 383
- US-A- 3 378 282
- US-A- 4 425 609
- US-A- 4 848 804
- US-A- 4 987 747
- US-A- 4 991 876
- US-A- 5 169 180
- US-A- 5 700 038
- US-B1- 6 422 606

## Description

### PRIORITY/CROSS-REFERENCE TO RELATED APPLICATIONS

### TECHNICAL FIELD

The presently disclosed and claimed inventive concept(s) generally relates to a system and method for assembling a system for use in HVAC in buildings, and more particularly to an HVAC system based on use of aluminum tubing and the connectors that make that system possible.

### BACKGROUND

For the past 50 years or so the standard procedure for installing HVAC equipment using copper tubing has been carried out either by mechanical means (flaring copper tube and using brass unions) or by brazing/soldering. Flaring of copper tubing is notoriously unreliable and is the source of a lot of refrigerant leaks in the field. If carried out correctly flaring is a sound method. The problem is it is seldom carried out properly and failures are numerous.

In the past soldering of copper tube was commonly used and was used with some success as the refrigerants at the time were of a low pressure, typically R12, R22, R11 and methyl chloride. Even so, solder was not good in areas of vibration and high temperature and many leaks occurred. Its one saving grace from an installation point of view was that solder melts at a very low temperature so it was easy to apply and caused no internal contamination of the tube as no oxidation takes place at low temperature, therefore the tube stayed relatively clean.

Brazing of copper tube is much the preferred method of connecting field tubing as it makes a much stronger connection if carried out properly, and is suitable for all the new generation of high pressure gases that are commonly found today, R502,R134A,R410A, R407A, 410A and R407C. However, the downside of brazing is that very high temperatures are involved, typically in the 900 degrees C range. A reasonably high level of skill is required to make sound joints, and contamination is a big issue. A new problem has also arisen in recent years regarding health and safety with the introduction of hot works permits.

In many situation now hot works permits are required before work can commence and these typically impose restrictions on when and where brazing can be carried out. This requirement translates into added costs and delays, is time consuming and inefficient and increasingly hot works are banned altogether.

When brazing takes place a huge amount of oxidation takes place inside the tube. Black soot forms from impurities in the air and this has to combated by the purging of dry nitrogen through the tubing while the brazing is taking place. Nitrogen purging is time consuming, irksome, expensive and rarely carried out, with the result that many systems are commissioned with heavily contaminated tubing which results in a catalogue of problems later on. The main failures due to contamination are contaminated compressor oil resulting in compressor failures, blockages of small tubes in the system resulting in control box failures and valves.

An added concern is the excessive production of CO2, a greenhouse gas, during the production of copper tubes. This added to the expense of copper makes a system that can be adapted to tubing other than copper, such as aluminum, very desirable.

HVAC systems around the world are made using copper tubes, which are fitted into brass or copper fittings. One of these systems is called a VRF air conditioning system. Aluminum is a much cheaper material, and aluminum production creates far less carbon dioxide, a major greenhouse gas, than copper production. Aluminum costs roughly half of what cupper does. There is thus a huge economic and environmental incentive for making HVAC systems based on aluminum tubing. The reason that such a system has not been used in the past is that fittings were not available which would connect aluminum tubes in a way that was leak free, and connectors made of metals other than aluminum would result in galvanic corrosion between the aluminum tubing and the non-aluminum fitting. Aluminum is not able to be brazed or welded in the field.

A major cause of thread failure within a building or process plant environment is galvanic corrosion - where the carbon steel pipe directly meets a brass valve, or is transitioned to copper pipe. Here, the microvolt difference in electrical potential of the metals will produce a small current between them - the result of which is to greatly accelerate the deterioration of the more reactive and often termed *"less noble"* carbon steel pipe.

In effect, an extremely small DC electrical circuit is created, with the steel pipe serving as the anode, the brass fitting or copper pipe acting as the cathode, and the water serving as a weak wire connection completing the circuit. In simplest terms, a very weak battery is created. Use of aluminum tubing with brass, copper, or steel has the same result: rapid corrosion.

*"Galvanic"* corrosion occurs between any two dissimilar metals in contact with each other and water, and typically attacks the steel pipe to a degree somewhat dependent upon existing corrosion conditions. Galvanic corrosion is defined as an electrochemical reaction of two dissimilar metals in the presence of an electrolyte, typically water, and where a conductive path exists. It is visually recognizable in its latter stages by some degree of deposit buildup where the dissimilar metals meet at the threads - creating a microfine leak. At that point, however, most of the damage has already occurred and replacement is required.

The global market for air-conditioning systems has risen dramatically in the last decade and looks set to continue to expand. Currently, the most advanced air-conditioning system in common use is the VRV or Variable Refrigerant Volume system.

A network of copper pipes is installed around the building to supply refrigerant from the HVAC core to the relevant cooling coils ("air handlers") in the required areas. As the copper pipes extend from the origin of refrigerant to the point of use, the copper pipes split into smaller and smaller tubes. The splitting of one tube into two, with one going to a fan coil, and the other continuing on to other fan coils, is accomplished at a y joint called a refnet in the prior art. The prior art refnet connections are welded together from a number of parts, and requires multiple welds for each Y joint. There has been no connection other than welding which ensured a leak free fitting. The welds have to be in a nitrogen environment. With so many welds there is fire hazard, and the welds require trained and highly paid personnel to accomplish the welding. One type of refnet junction is formed from an incoming pipe that splits at the junction into two outgoing pipes. Each of the three pipes has stepped down diameters to match the requirements for that particular refnet junction. One way in which this is accomplished is to use a pipe with built in size reductions, then just cutting off the pipe in the region of pipe diameter that matches the size of the system pipe to be attached.

When the component is to be fitted, the diameter of the pipe is determined and the correct diameter section of the component is welded on. This is a cumbersome operation, especially since it is necessary to purge the weld region with nitrogen in order to prevent oxidation of the metal. Accordingly, the connection of tubing component to pipe is intricate and subsequently expensive and prone to error and fire risk, and takes an excessively long time to complete, and requires specialized and expensive technicians to build.

Besides refnet junctions, the HVAC system requires at least two other types of connections. One type joins two copper tubes together, and another type joins a flared copper tube to a brass fitting with an internal thread opposite the flared tube fitting. An aluminum tubing based HVAC system requires joints sufficiently tight that no leakage occurs and which prevents galvanic corrosion at the fittings. If this could be accomplished, a great savings in cost would be realized, an environmentally favored solution could be achieved, and projects could be built faster and cheaper.

Systems showing precharacterising features of the present invention are known from US-A-4991876, DE-A1-3808383, US-A-3378282 and WO-A1-2005/059424.

It is an object of the present invention to provide an HVAC system based on aluminum tubing rather than copper tubing

It is a further object of the present invention to provide a type of refnet junction forming assembly to allow refnet junctions to be fabricated on the job site, without welding, to match the size and pressure specifications of the HVAC system. This on-site fabrication is designed to securely seal the system so that refrigerant gasses will not escape, eliminate all welding steps. By eliminating the welding step, the assembly is much less of a fire hazard. Such a system can also be assembled without hiring the highly skilled welders required by the prior art, and greatly shortens the fabrication time.

It is a further object of the present invention to provide a type non-conducting and non-corroding connector for connecting two aluminum pipes in a leak free junction.

It is a further object of the present invention to provide a type non-conducting and non-corroding connector for connecting an aluminum tube to a threaded fitting.

### SUMMARY

The disclosed technology allows the joining of high pressure, high pressure tubing without the use of heat for uses such as carrying refrigerant. It also allows assembling a system using joints and tubing of dissimilar metals, such as copper, steel and aluminum, while achieving an unbreakable connection that massively exceeds its field application. The disclosed technology has gained ETL listing to U.L. 207 which requires components to survive a 3000 psi pressure test which is far higher than anything practically required.

The disclosed technology system dispenses with the need for skilled brazing personnel, nitrogen purging, hot works permits and even use of copper tubing for carrying refrigerant. The disclosed technology is able to dispense with the use of expensive copper tube because of the use of dielectric coated fittings. This coating prevents the corrosion through electrolysis of the tubing and allows the joining of aluminum and copper tubing, and use of brass and steel fittings. The ability to use aluminum in high pressure refrigerant lines is the first time ever in the history of HVAC that aluminium tubing can totally replace copper.

An HVAC system built by the disclosed technology uses computer aided design to develop the specifications of the system, and then a relatively small selection of fittings and tools are used to fabricated on-site, without welding, brazing or soldering, the multiple tubing connections in the system. One part of the system is a part that replaces the prior art refnet junction, and is called a Y or tri connector. The assembly of tools and parts which can be used to make a tri connector also serves to make other connections of tubing. The tri connector is a hub of steel, into which three steel connectors with one threaded end and one press fit end are threaded into the hub. The connectors are coated with a dielectric layer to prevent electrical contact between parts. By making the hub of steel with threaded openings, steel press - thread connectors can be assembled to form a tri connection which is totally gas proof and able to withstand high pressures. With a limited number of hubs, press-thread connectors, and press connectors, and pressing tools, and locking rings, a system can be constructed from a greatly reduced inventory of parts, on site, with no welding.

A dielectric connector designed to join different types of metal pipe together, without welding brazing or soldering, is another component of the system. For instance, if a copper tube and a steel fitting were joined, electrical separation would be necessary as the combination of metals under solder could produce galvanization, leading to corrosion and failure of the pipe. The same would be true of aluminum touching steel, or copper touching aluminum. The connector can be of several versions, but each version has a first end that presses together to hold a section of tubing. The second end of the connector can be a mirror image of the first end, or can be a threaded portion, or can be the equivalent of a flare nut. The connector is generally cylindrical and is preferably made of steel, coated inside and out with a dielectric coating. Surrounding the connector body are at least two ring-like tool ridges which encircle the connector body generally in the center of the connector body. To one side of the tool ridges is a first flange on a first end of the connector body and to the other side of the connector body is a second flange on the second end of the connector body. Each flange is encircled by a sealing ridge, and has an interior surface which extends through the connector body. On the interior surface is a ridge which is provided to abut the end of a tube inserted into the connector body. There is a first ridge on the first end and a second ridge on the second end, both in the interior surface of the connecting body. The connector body is covered inside and out with a dielectric material, namely a dielectric plastic, or some other suitable nonconducting material, which is plated onto the connector body on the interior and the exterior by an electric plating method. The dielectric material which covers the steel connector allows tubing sections of dissimilar metals to be joined to the steel connector. Thus, combinations of brass, copper, and aluminum tubing may all be joined to the steel connector without causing cathodic corrosion. The dielectric material is typically from 15-20 microns in thickness.

The use of steel connectors for the aluminum tubing allows the seal to be secure to gas leakage, by sandwiching the aluminum tubing end between an unyielding steel tube insert and the steel connector, with pressure applied by a steel connector nut which is pressed onto the connector body. A tool gripping ridge in the middle of the connector are tool ridges and are provided for engagement by the jaws of the pressing tool. The connector, connector nut, and tube inserts can also be zinc plated.

The disclosed technology also includes pressing tools for pressing the connector nut onto the connector body. This requires a lot of force, since the act of pressing the connector nut onto the connector body sandwiches the end of the tubing between the steel tubing insert and the inside of the connector body. The pressing tool has an upper clamp body and a lower clamp body. The two clamp body sections are attached to each other using rods for alignment, with the two clamp body sections being configured to move toward and away from each other. Springs on the rods press the two body sections apart. A hydraulic line is attached to the lower clamp body, and when activated presses the two body sections together by hydraulic force.

There is a hydraulic cylinder below each of the two rods, and the two rods form the piston in the cylinders. Hydraulic fluid enters the two cylinders, and forces the pistons toward the bottom of the lower clamp body.

Each of the lower and upper body sections have a top side, a bottom side, facing sides, outfacing sides, left sides, and right sides. Each of the body sections define a generally cylindrical passage, extending from the facing sides to the outfacing sides. This passage is a partial cylinder, and would vary in size depending on the size of the tubing and fittings being worked on.

In each of the body sections, in the semi-cylindrical passage, are located semi-cylindrical cutouts, forming support positions for the insertion of jaws. The jaws are semi-cylindrical, and have a protruding interior ridge, or tool grip ridge. The tool grip ridge is consistent with a corresponding ridge on the connector, and the ridge on each jaw presses against the ridge on the connector to press the pipe into the fitting. The joining of the aluminum or copper pipe to the fitting includes an inner locking collar also called a tube insert, which sandwiches the pipe between the wall of the fitting and the inner locking collar. An outer locking collar is simultaneously pressed onto the outside of the fitting.

A second embodiment of the disclosed pressing tool comprised of two sections which are rotationally attached to each other. Each half is polygonal in shape, such as a hexagon, and on each of several of the hexagonal sides is located a jaw sized for engagement with a tool sealing ridge of a particular size of connector. Each jaw can be for a different size of connector, and the two sections can rotate in relation to each other. Thus the two sections can be rotated to hold different sized of connectors, including connectors with two different size ends. An example of this device would be hexagonal, with different sizes of jaws on 4 to 6 of the sides.

In each of these embodiments, the sections are pressed toward each other by hydraulic means, which can be a foot pedal or a hydraulic motor. This version of the device works with smaller sized connectors than the version discussed above, and also works with connectors with different sized ends, i.e. adapters, which connect tubing of two different diameters.

In the second embodiment of the pressing tool, the two sections are joined by a rod, as in the first embodiment, with the rod surrounded by a spring which forces the two sections apart. The rod is the piston of a hydraulic cylinder and forces the two sections together when activated, to secure the pipe end between an outer locking collar, an inner locking collar, and the flange of the connector. A side of the connector is secured to a pipe end, then the connector is reversed to secure a pipe end to the other side. A locking pin secures the two parts of the rotational press, and retains their alignment as they are used to press a connection into engagement with a tubing section.

Also disclosed is also a method of joining tubing sections in order to assemble a refrigeration system, which is made of the following steps:

The first step is inserting a tube insert into the end of a first tube section to be joined to a second tube section.

The next step is placing a locking nut onto the first tube end and sliding it a short distance up the first tube end.

The next step is applying a locking preparation fluid on a portion of the tube end, on an exterior surface of the tube end.

The next step is placing the tubing end into a connector flange of a connector body, with the connector made of steel and being a generally cylindrical tubing connector body as described above. The tubing is placed so that it rests against the ridge on the interior of the connector.

The next step is placing the first tube, and the tube insert with the locking ring on the first tube, into a two piece press with the press including a first jaw for engagement with the outer end of the locking nut, and a second jaw for engagement with one of the tool grip ridges on the connector.

The next step is developing hydraulic pressure for pressing the two pieces of the press together and forcing the locking nut over the connector flange, with one end of the tube sandwiched between the tube insert and the inside of the connector flange. Hydraulic pressure may be developed by a foot press or by other hydraulic press means. A foot press is advantageous because it can be used on a job site which does not yet have electricity.

The next step is repeating these steps on the end of a second tube, so that two tubes are joined to the connector. Using the steel connector, coated with a dielectric material, dissimilar metals may be joined together. For instance, any combination of brass, copper, or aluminum tubes may be joined in this manner to the connector, and not cause cathodic corrosion of the connector or of the tubings. The result of this adaptability in the use of materials results in refrigeration and HVAC systems finally being able to use aluminum tubing, which has never been the case before and which will revolutionize the industry. Aluminum is less costly than copper, and this method eliminates the need for welding the joints in HVAC systems. The cost savings in the industry will drive widespread adoption of this technology.

The method can also include the steps of using zinc plated tube inserts and locking nuts, with the zinc plated to a thickness of approximately 8 microns.

The purpose of the Abstract is to enable the public, and especially the scientists, engineers, and practitioners in the art who are not familiar with patent or legal terms or phraseology, to determine quickly from a cursory inspection, the nature and essence of the technical disclosure of the application. The Abstract is neither intended to define the inventive concept(s) of the application, which is measured by the claims, nor is it intended to be limiting as to the scope of the inventive concept(s) in any way.

Still other features and advantages of the presently disclosed and claimed inventive concept(s) will become readily apparent to those skilled in this art from the following detailed description describing preferred embodiments of the inventive concept(s), simply by way of illustration of the best mode contemplated by carrying out the inventive concept(s). As will be realized, the inventive concept(s) is capable of modification in various obvious respects all without departing from the inventive concept(s). Accordingly, the drawings and description of the preferred embodiments are to be regarded as illustrative in nature, and not as restrictive in nature.

### BRIEF DESCRIPTION OF THE DRAWINGS

Figure 1 is a view of the overall HVAC system.
Figure 2 is an exploded view showing a tubing connector and connector nuts.
Figure 3 is a cutaway view of a disclosed hub connector.
Figure 4 is a cutaway view of a disclosed tubing connector.
Figure 5 is a joint of the system, with two tubing sections which can be dissimilar metals or different sizes.
Figure 6 is a disclosed Y connection.
Figure 7 is a view of a prior art refnet junction.
Figure 8 is a side cross section of a disclosed flare nut connection.
Figure 9 is a side cross section of a disclosed flare nut connection.
Figure 10 is a view of a tubing end and a tubing insert.
Figure 11 is a view of a tubing end and a tubing connector.
Figure 12 is a view of a connector nut sliding onto a connector body.
Figure 13 is a view of a joint formed on a tubing end.
Figure 14 is a view of a tubing connector joining two sections of tubing.
Figure 15 is a view of a disclosed tool for forming joints.
Figure 16 is a view of a disclosed tool for forming joints.

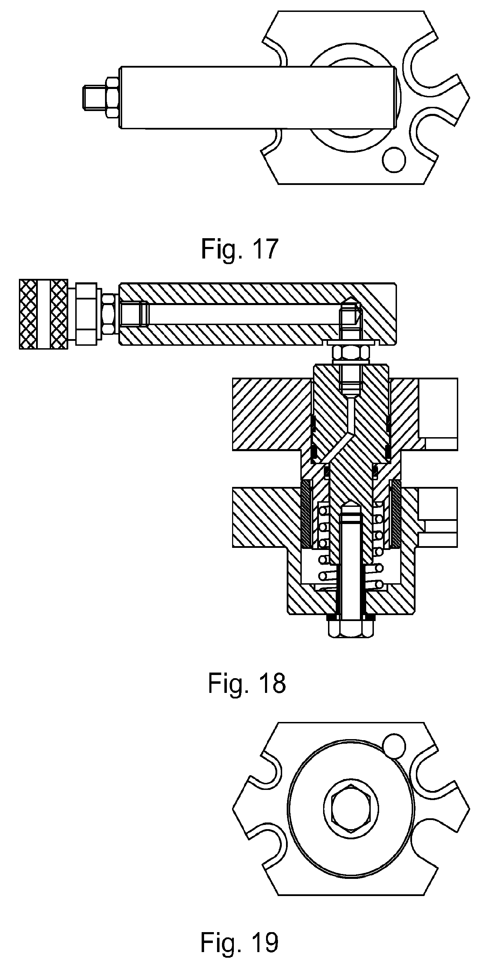

Figure 17 is a view of a disclosed tool for forming joints.
Figure 18 is a view of a disclosed tool for forming joints.
Figure 19 is a view of a disclosed tool for forming joints.

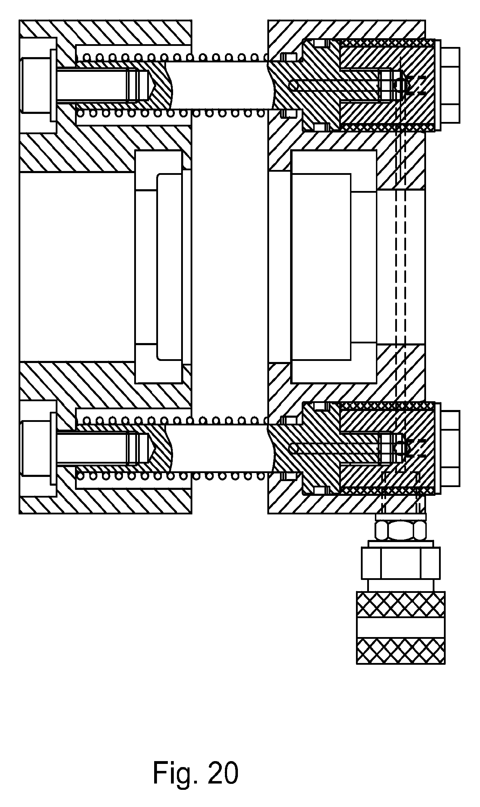

Figure 20 is a view of a disclosed tool for forming joints.

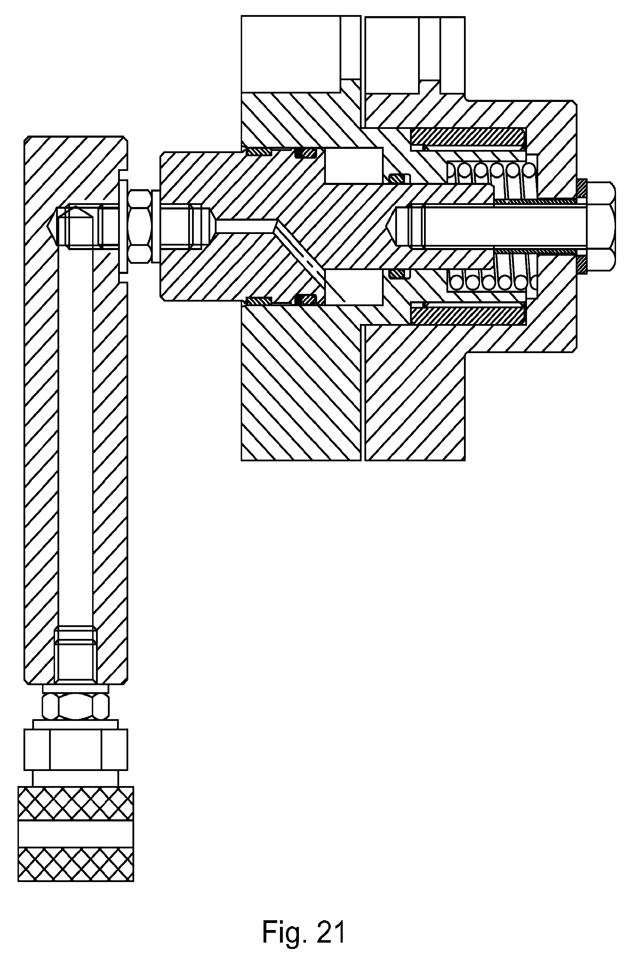

Figure 21 is a view of a disclosed tool for forming joints.

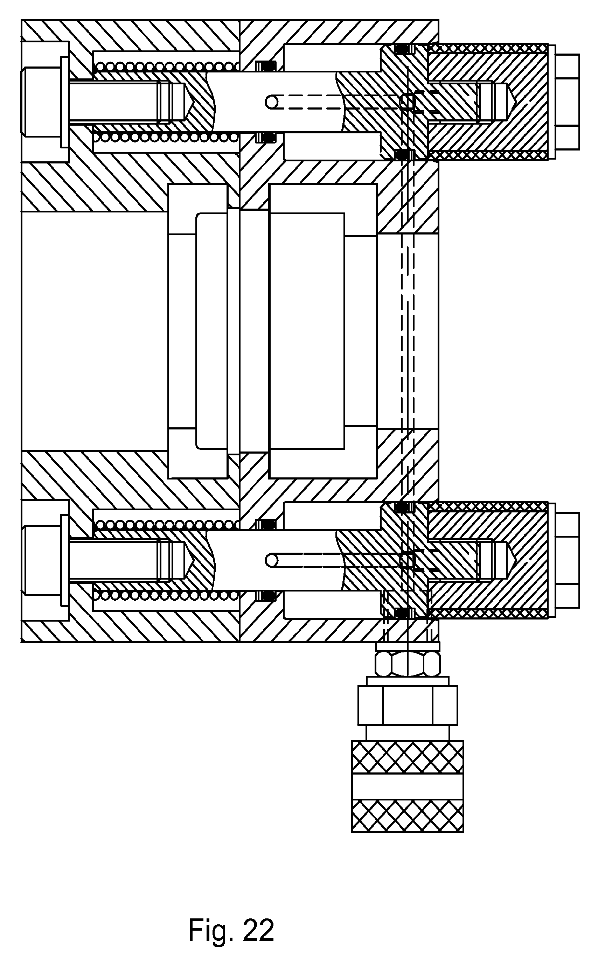

Figure 22 is a view of a disclosed tool for forming joints.

### DETAILED DESCRIPTION OF PREFERED EMBODIMENTS

While the presently disclosed inventive concept(s) is susceptible of various modifications and alternative constructions, certain illustrated embodiments thereof have been shown in the drawings and will be described below in detail. It should be understood, however, that there is no intention to limit the inventive concept(s) to the specific form disclosed, but, on the contrary, the presently disclosed and claimed inventive concept(s) is to cover all modifications, alternative constructions, and equivalents falling within the spirit and scope of the inventive concept(s) as defined in the claims.

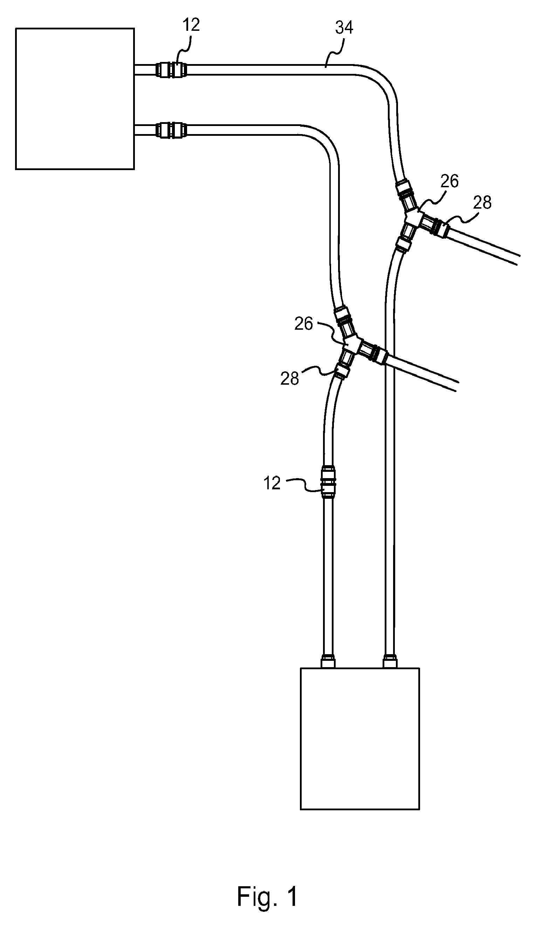

Shown in Fig. 1 is a diagram of a refrigerant system of the disclosed technology. Also shown in Fig. 1 are links of tubing 34, which are connected to fittings with a connector 12, which may be of the type designated a press-press connector, which refers to both ends of the connector being a press fitting. The system also includes connectors which are press / thread connectors in which one end of the connector is joined to tubing by pressing, and the other end is joined to a fitting by threads. Shown are Y connectors 26, which involve the use of press-thread connectors 28. Each of these fittings will be discussed as they appear in more detail later figures. The system as a whole is made up of parts which are configured to be assembled on a job site without welding. All of the fittings together form a system which is capable of holding a very high pressure, which involves the use of dissimilar metals, with each of the fittings and tubing sections configured to be connected to each other in a corrosion free high pressure joint, and to be assembled on the job site with no requirement for welding.

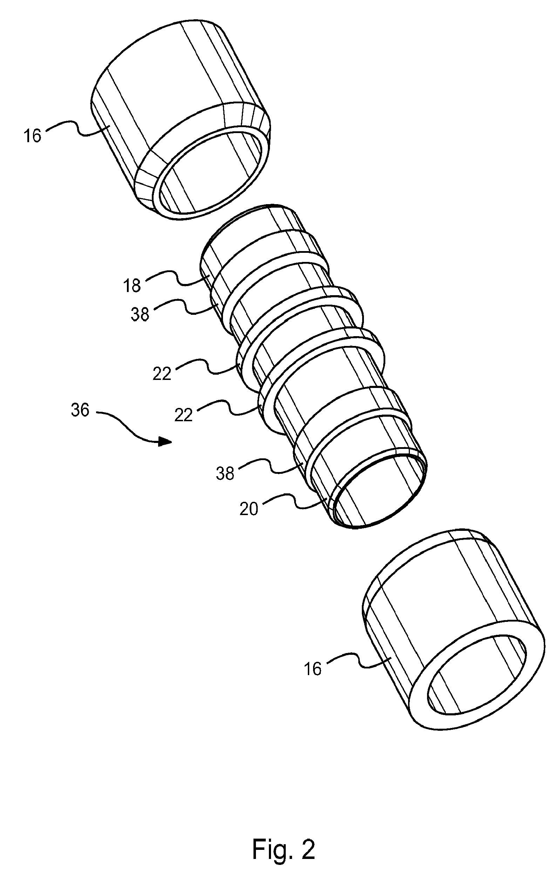

Fig. 2 shows a press-press connector 36, of the invention. At either end of the press-press connector, are shown connector nuts 16, which would typically be uncoated steel rings. Each of the connector nuts 16 are joined to the press-press connector 36, by respectively being pressed on to the first end 18, and a second end 20, of the connector body. The connector body is preferably a steel fitting which is covered inside and out by a dielectric coating 24, which insulates the connector from electrical discharges and corrosion from the tubing. This feature allows dissimilar materials to be used in the system, such as aluminum tubing connected to steel fittings, and optionally with copper tubing or brass fittings. The press-press connector 36, includes a tool gripping ridge 22, on each end of the connector. The connector also includes a sealing ridge 38, on each end of the connector. The press-press connector 36 can be in different sizes, depending on the requirements of the system. A typical HVAC system using the disclosed technology might be comprised of thousands of Y connectors and press-press connectors 36, and numerous press-thread connectors 28.

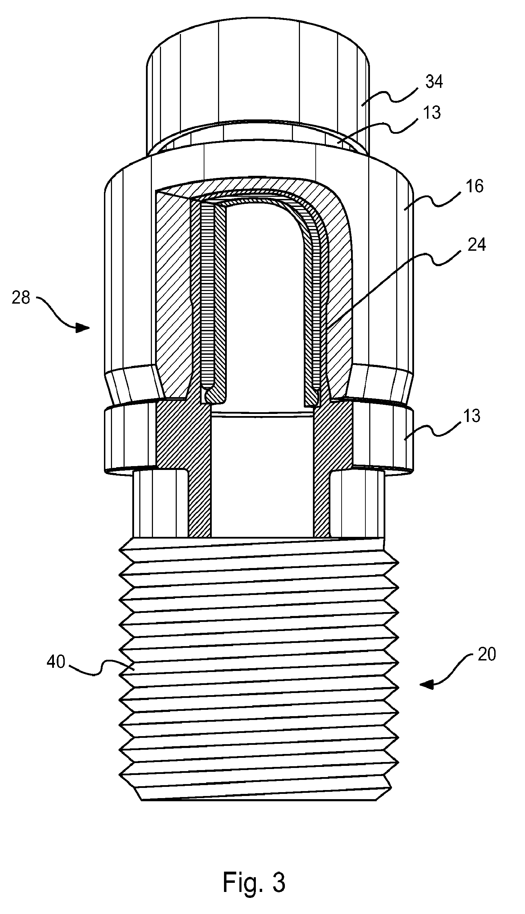

Fig. 3 shows a press-thread connector 28, which is identical on one end to the press-press connector 36, but has a thread section 40, on the second end 20, of the device. Included in the press-thread connector 28, is a connector body 13, preferably made of steel and coated with a dielectric layer 24, which may be seen in this cross-sectional view. The connector body 13, extends through the connector nut 16, and is visible on the outside of the connector nut 16. Attached to the connector body is a section of tubing 34. A number of different types of tubing 34, may be utilized including copper, but an important contribution of the disclosed technology system is the ability to utilize aluminum tubing in a high pressure refrigerant carrying application. Present in the threaded part of the hub connector is a seal and o ring for completing the joint.

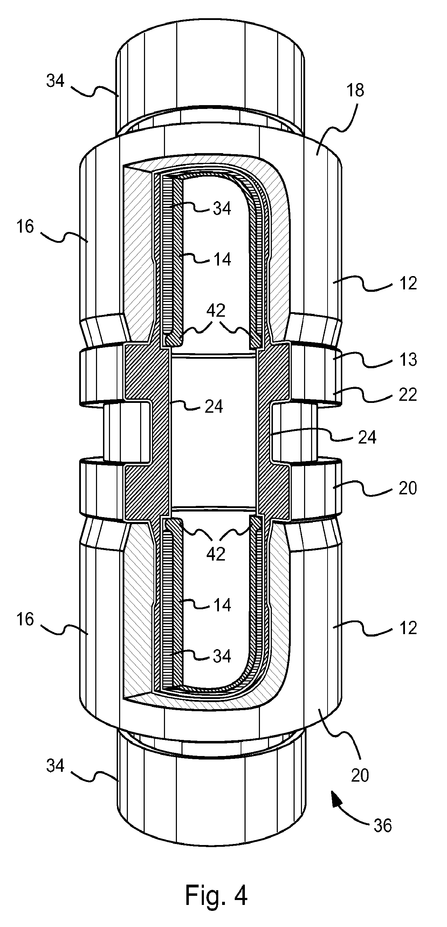

Shown in Fig. 4 is a press-press connection 36. It includes a connector body 13, and a connector 12, at each of the first end 18, and the second end 20. Shown are two (2) lengths of tubing 34, which are joined by the connector 12. Each piece of tubing 34, surrounds a tubing insert 14, at the end of the tubing. The tubing insert 14, has a lip 42, which prevents the tubing insert from entering the inside of the tube 34, and which positions it on the end of each of the tubing 34.

Shown in Fig. 4 are connecting nuts 16, which are positioned surrounding and circumvolving the first end 18, and the second end 20, of the connector body, and securing in place the ends of the tubing sections 34. Each end of the connector body 13, includes a tool gripping ridge 22, which is utilized in forming the joint, and which allows a pressing tool to apply the pressure that seats the connector nut 16, on to the connector body 13. Fig. 4 also shows a dielectric layer 24, which coats the inside and the outside of the connector body 13. The dielectric layer 24, is preferably a layer approximately 10 to 24 microns thick, which is deposited by an electrical process. A suitable material for use in the dielectric coating 24, has been found to be electrophoretic paint, but other materials with similar properties would also be suitable.

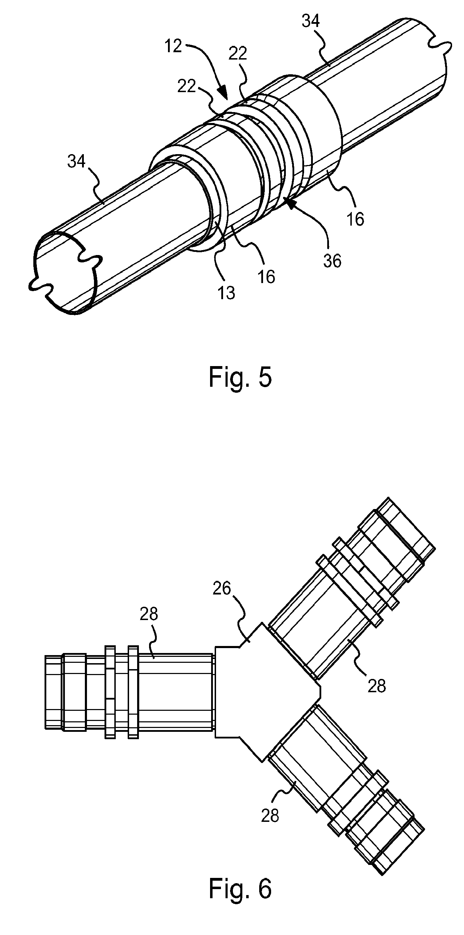

Fig. 5 shows a connector 12, which joins tubing sections 34, at a high pressure corrosion free joint. Visible in this figure are the connector nuts 16, at either end of the press-press connector 36, with the tool gripping ridges 22, visible and a part of the connector body 13, extending out from the connector nut 16. In a fitting such as that as shown in Fig. 5, one (1) section of tubing may be aluminum, another section may be copper, or other materials may be securely attached to each other without a problem with galvanic corrosion.

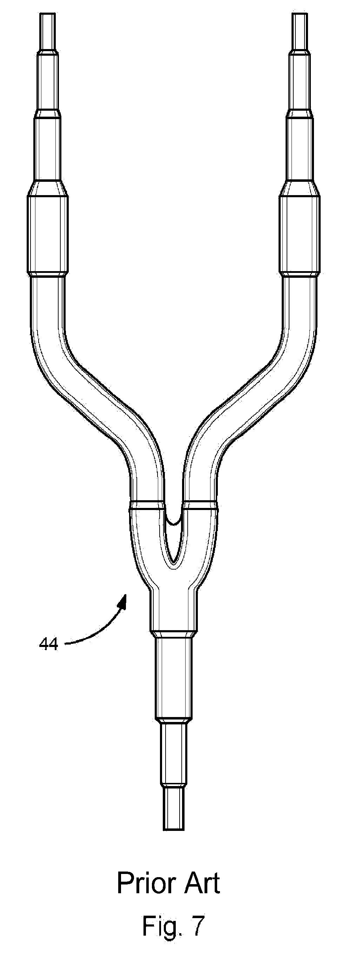

Fig. 6 shows a Y connector 26, of the disclosed technology. The Y connector 26, is preferably steel, and may be coated with a dielectric coating or layer. The Y connector 26, is preferably formed with three (3) threaded openings, into which three (3) press-thread connectors 28, may be inserted and secured. A common use of the Y connectors is to change the diameter of the outgoing tubing to a smaller size than the incoming tubing, which would be determined by the engineering calculations of the refrigerant system. The Y connector 26, of Fig. 6 may be contrasted with a prior art refnet junction 44, which is shown in Fig. 7. In prior art refnet junctions, an incoming pipe enters the junction and two (2) outgoing pipes leave the junction. Each of the pipes have step down diameters so the operator may choose the section of tubing with the required diameter, cut it off at that point and connect the tubing, and weld on a joint that connects to tubing of the appropriate diameter. As noted above, use of prior art refnet junction 44, requires multiple welding steps, nitrogen purging, pressure testing and other time consuming and expensive steps.

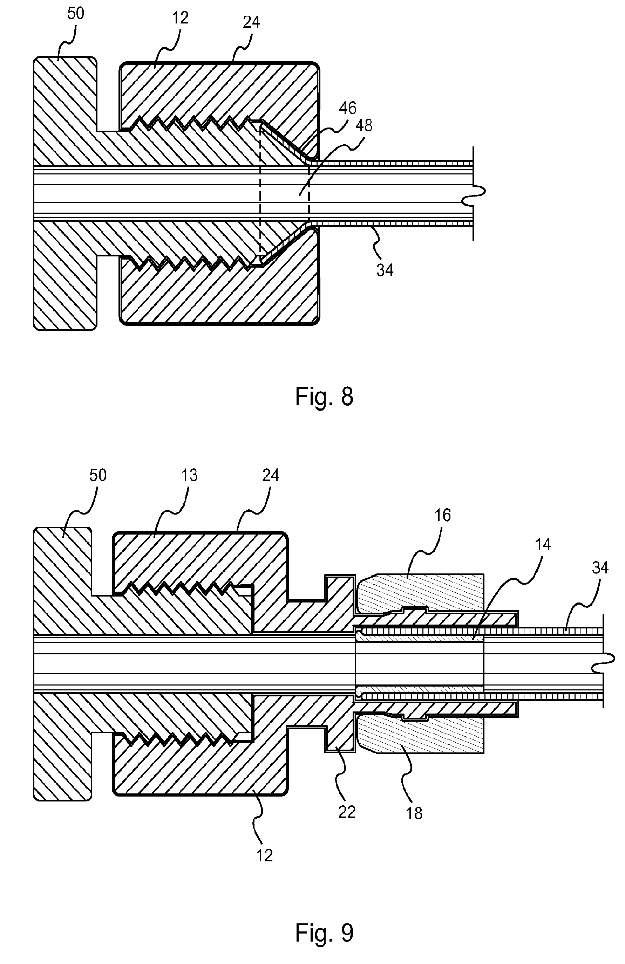

Shown in Fig. 8 and Fig. 9 are two (2) types of connectors 12, of the disclosed technology, which are adapted for use as flare nuts. Fig. 8 shows a connector 12, with a dielectric coating 24, which covers the inside and the outside of the connector 12. In this particular version of the connector, a generally conical flare seat 46, is present, which fits the flared end 48, of the tubing section 34. Because the flare seat 46 is covered with the dielectric coating 24, the connector 12, may be any material, such as brass or steel and the tubing 34, may also be dissimilar materials such as copper or aluminum. In this example, a brass male piece 50, may be screwed in to the threaded interior of the connector 12. The brass male piece 50, is equivalent to prior art portions of a brass flare nut.

Fig. 9 shows another version of a connector which acts in an equivalent manner as a prior art flare nut. Present in this embodiment is a section of tubing 34, which does not have a flared end 48. Instead it ends in an un-flared end and is locked in place by the connector nut 16, a tubing insert 14, and a first end 18, of a connector as has been described previously. This connector has a tool gripping ridge 22. The connector body 13, may be coated on the inside and outside with the dielectric coating 24, as described in previous connectors.

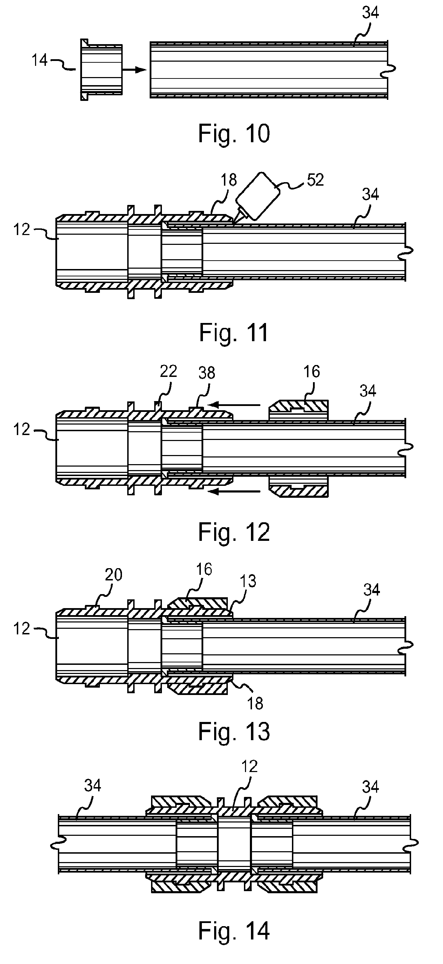

Shown in Figs. 10 through 15 is the sequence in which two (2) sections of tubing 34, are joined together. In Fig. 10, a section of tubing 34, is cut off with leaving a square end. It is reamed with a tool in order to make the interior wall smooth, and a tubing insert 14, is placed in the end of the tubing section 34. Fig. 11 shows a connector 12, being placed loosely over the end of the tubing section 34, in which the tubing insert 14, is placed at the end. In this loose fitting, the end of the first end 18, of the connector is marked with a marker 52, to identify the correct positioning of the connector when it is fully inserted on to the end of the tube section 34.

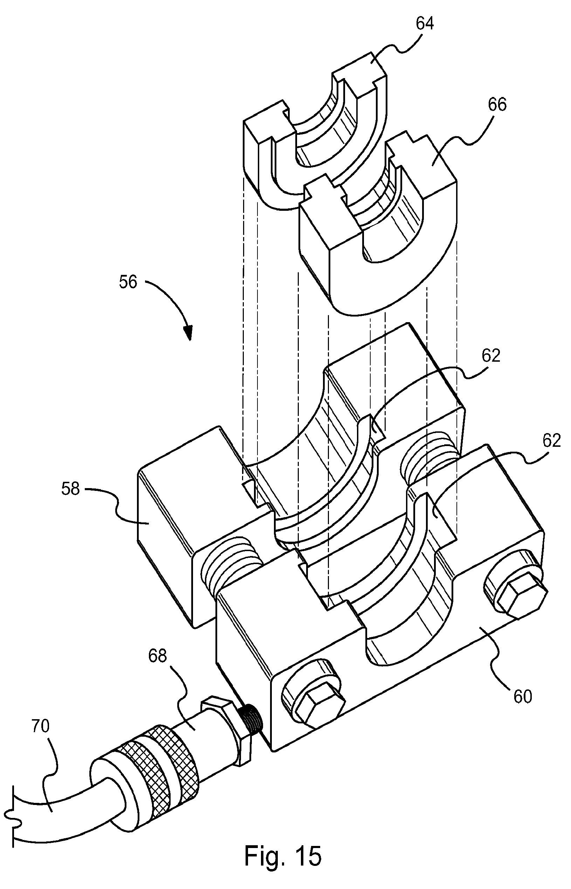

After marking as shown in Fig. 11, the connector 12, is removed, and a connector nut 16, is slid on to the tubing section 34. Once the tubing connector nut 16, is placed on the tubing section 34, the connector 12, is slid back in to place over the end of the tubing section 34. A small amount of Locktite sealant is first placed on the end of the tubing section 34, to help with the sealing of the tubing to the inside of the connector 12. A small amount of lubricant is also placed on the sealing ridge 38, of the connector 12. With the connector on the end of the tubing section 34, the connector nut 16, is pressed on to the sealing ridge 38, of the connector, until it is in contact with the side of the tool gripping ridge 22, or close to contact. A preferred dielectric coating has lubricant built into the layer, but a lubricant can also be applied. This position is shown in Fig. 13, with the tubing 34, attached to a first end 18, of the connector body, and with part of the connector body 13, extending beyond the connector nut 16. The same process is utilized on the second end 20, of the connector nut 12, and two (2) tubing sections 34, are joined to the connector 12, as shown in Fig. 14. Shown in Fig. 15 is a pressing tool of the disclosed technology which presses a connector nut on to an end of a connector. The pressing tool has a first half and a second half which are spaced apart from each other, and move toward each other under hydraulic pressure. The first half and the second half shown in Fig. 15 is a pressing tool 56, which includes a first half 58, and a second half 60. Each half has a jaw receiver 62, which is a generally semi-circular recess which has contours which fit a first jaw 64, and a second jaw 66. When the jaws 64 and 66 are in place in the jaw receiver 62, a connector 12 is fitted with a tubing section 34, and a tubing insert 14, may be placed in the jaws, and a connector nut 16, is pressed on to the sealing ridge 38, of the connector body 13. Hydraulic pressure may be applied through a hydraulic fitting 68, and a hydraulic line 70, which goes to a pump (not shown). Once the connector nut 16, is pressed on to one (1) side of a connector, another tubing 34, may be pressed on to the other side of a press-press connector.

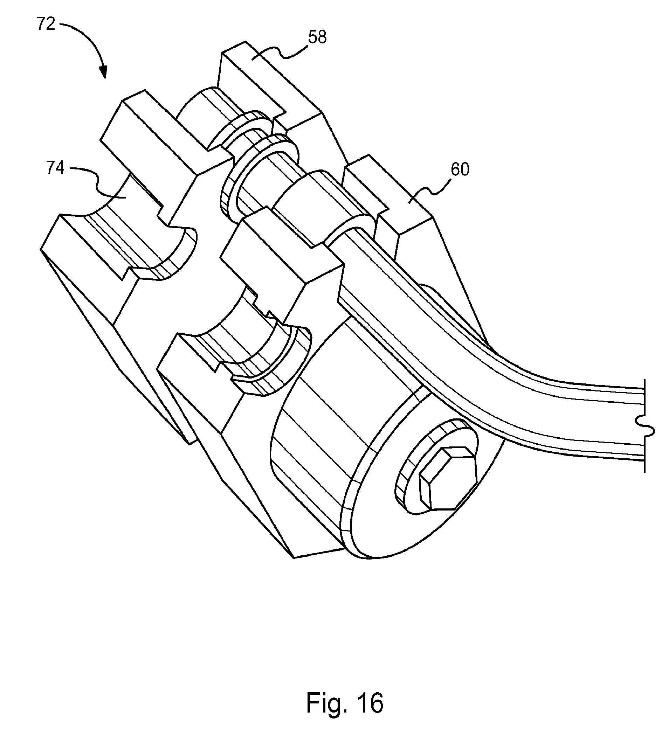

Fig. 16 shows a different type of pressing tool which is designated as 72. The pressing tool 72, also has a first half 58, and a second half 60, and is further provided with builtin jaws 74. The first half is configured to rotate around the second half, and the built-in jaw 74, may be designed for a number of different sizes of connectors 12. Using the pressing tool 72, a connector which joins different sizes of tubing may be pressed together and form an adaptor between different sizes of tubing.

While certain exemplary embodiments are shown in the Figures and described in this disclosure, it is to be distinctly understood that the presently disclosed inventive concept(s) is not limited thereto but may be variously embodied to practice within the scope of the following claims. From the foregoing description, it will be apparent that various changes may be made without departing from the scope of the disclosure as defined by the following claims.

## Claims

1. An HVAC system, comprising:
a plurality of tubing sections 34 connecting a source of refrigerant to a plurality of distributed cooling units;
**characterised by**:
a plurality of Y connectors 26 for attachment to said tubing sections with each Y connector comprising a Y connector hub with three threaded hub openings, and three hub connectors 28 for threading into each of said threaded hub openings, with said hub connectors having a dielectric layer 24 on an inner surface and on an outer surface and a press fit joint on a first end, and a thread fit joint 40 on a second end, for attachment to said tubing sections 34 to said Y connector hub; and
a plurality of generally cylindrical hollow tubing connectors 12, 36 with a dielectric coating layer 24 on an inner surface and on an outer surface, with said tubing connectors 12, 36 having a press fit joint on a first end 18 and a press fit joint on a second end 20, for joining two tubing sections 34;
and wherein said Y connectors 26 and said tubing connectors 12, 36 form a network of tubing sections to deliver and return predetermined quantities of refrigerant from said source of refrigerant to said distributed cooling units, with said system comprising press fit and thread fit joints assembled without heat.

2. The HVAC system of claim 1, in which said press fit joints further comprise a tubing insert 14 configured for placement inside an end of said tubing section, with said hub and tubing connectors having a connector body configured for placement over said end of said tubing section, and a connector nut 16 configured for sliding engagement over said connector body, with said connector nut 16 pressing said end of tubing section between said tubing insert 14 and said connector body, with said dielectric coating layer 24 preventing electrical contact between said tubing section and said connector body, with said joint configured for assembly by pressing and without head.

3. The HVAC system of claim 2 in which said connector body further comprises a raised sealing ridge 38 on an outside of said connector body, for maximizing pressure from said connector nut 16 to said tubing insert 14.

4. The HVAC system of claim 1 in which said threaded openings of said Y connector hubs are of different sizes for receiving different sizes of threaded hub connectors 28.

5. The HVAC system of claim 1 in which said tubing connectors have a different sized connector body on said first end 18 and said second end 20.

6. The HVAC system of claim 2 in which said press fit connector body ends further comprise a tool gripping ridge 22, configured to assist a tool in pressing said connector nut 16 onto said connector body.

7. The HVAC system of claim 2 in which said Y connector hub, said tubing inserts 14, and said connectors are made of steel, and said tubing sections are made of aluminum.

8. The HVAC system of claim 2 in which said tubing insert 14 further comprises an outward facing lip, which prevents said tubing insert 42 from slipping inside said end of tubing section.

9. The HVAC system of claim 2 in which said tubing sections and said connectors may be of dissimilar metals.

10. The HVAC system of claim 2 in which said dielectric material is a layer 24 of nonconducting material electrically deposited on said connector and bonded to said connector body.

11. The HVAC system of claim 10 in which said dielectric material is an electrophoretic paint.

12. The HVAC system of claim 2 in which said dielectric layer 24 is from 15 to 25 microns in thickness.

13. The HVAC system of claim 9 in which said dielectric material is a plastic.

14. A method of forming of an HVAC system with weldless joints, comprising the steps of:
analyzing a building HVAC system to determine the required number, placement, and sizing of each Y connection 26 in the system, to deliver a calculated amount of refrigerant to a plurality of distributed cooling units;
establishing a position of each Y connection 26 in the physical building;
building each Y connection 26 called for using an appropriately sized Y connector hub 28, with predetermined sizes of threaded openings;
attaching by threading appropriately sized hub connectors into said connector hub 28, with each hub connector having a dielectric layer 24 inside and outside, and a press fit first end and a threaded second end;
cutting sections of aluminum tubing to connect a source of refrigerant to said Y connections 26 and to said distributed cooling units;
forming joints between said aluminum tubing sections 34 and said Y connections 26 by inserting a tubing insert 14 in an end of said tubing sections 34, placing a connector nut 16 on each of said end of tubing sections 34, placing said tubing end in a connector body on said press fit end of said connectors, pressing said connector nut 16 onto said connector body to form a tight weldless joint without heat;
determining where sections of tubing need to be connected to other sections of tubing, including where tubing diameter changes;
forming joints between said aluminum tubing sections by use of tubing connectors which form leak proof joints without heat, by inserting a tubing insert 14 in an end of said tubing sections, placing a connector nut 16 on each of said end of tubing sections 34, placing said tubing end in a connector body on said press fit end of said connectors, pressing said connector nut 16 onto said connector body to form a tight weldless joint without heat.

15. The method of forming an HVAC system of claim 14, in which the step of pressing said connector nuts 16 onto said connector body further comprises using a two piece press 56, 72, with one piece of said press gripping said connector nut 16, and a second side of said press gripping a tool gripping ridge 22 of said connector, and pressing them together by moving the two pieces of said press together.

16. The method of forming an HVAC system of claim 15 in which said two piece press 56 has replaceable curved jaws 64, 66 for engagement with different sized connector nuts 16 and connector bodies.

17. The method of forming an HVAC system of claim 15 in which said two piece press 72 is configured for one press piece 58 to rotate around the other press piece 60, and with each press piece 58, 60 to comprise multiple connector jaws 74 for engagement with different sized connector nuts 16 and connector bodies, so that a variety of different size connectors with one end different from the other end, may be fitted in the two piece press and pressed again connector nuts 16 to form leak proof and weld less joints for high pressure refrigerant lines.

## Patentansprüche

1. Klimaanlagensystem, Folgendes umfassend:
mehrere Rohrleitungsabschnitte 34, die eine Kältemittelquelle mit mehreren verteilten Kühlungseinheiten verbinden;
**gekennzeichnet durch**:
mehrere Y-Verbinder 26 zum Anbauen der Rohrleitungsabschnitte, wobei jeder Y-Verbinder eine Y-Verbindernabe mit drei mit Gewinde versehenen Nabenöffnungen sowie drei Nabenverbinder 28 zum Einführen in jede der mit Gewinde versehenen Nabenöffnungen aufweist, wobei die Nabenverbinder eine dielektrische Schicht 24 auf einer Innenoberfläche und auf einer Außenoberfläche sowie eine Pressverbindung an einem ersten Ende und eine Gewindeverbindung 40 an einem zweiten Ende aufweisen, zum Anbauen an die Rohrleitungsabschnitte 34 an die Y-Verbindernabe; und
mehrere im Allgemeinen zylindrische hohle Rohrleitungsverbinder 12, 36 mit einer dielektrischen Beschichtungsschicht 24 auf einer Innenoberfläche und einer Außenoberfläche, wobei die Rohrleitungsverbinder 12, 36 eine Pressverbindung an einem ersten Ende 18 und eine Pressverbindung an einem zweiten Ende 20 aufweisen, um zwei Rohrleitungsabschnitte 34 zu verbinden;
und wobei die Y-Verbinder 26 und die Rohrleitungsverbinder 12, 36 ein Netzwerk aus Rohrleitungsabschnitten ausbilden, um vorgegebene Mengen von Kältemittel von der Kältemittelquelle zu den verteilten Kühlungseinheiten zu liefern und zurückzuführen, wobei das System Pressverbindungen und Gewindeverbindungen aufweist, die ohne Wärme zusammengesetzt werden.

2. Klimaanlagensystem nach Anspruch 1, wobei die Pressverbindungen ferner einen Rohrleitungseinsatz 14 umfassen, konfiguriert, in einem Ende des Rohrleitungsabschnitts platziert zu werden, wobei die Nabe und die Rohrleitungsverbinder Folgendes aufweisen:
einen Verbinderkörper, der konfiguriert ist, über dem Ende des Rohrleitungsabschnitts platziert zu werden, und eine Verbindermutter 16, konfiguriert, gleitend über dem Verbinderkörper einzugreifen, wobei die Verbindermutter 16 das Ende des Rohrleitungsabschnitts zwischen dem Rohrleitungseinsatz 14 und dem Verbinderkörper einpresst, wobei die dielektrische Beschichtungsschicht 24 einen elektrischen Kontakt zwischen dem Rohrleitungsabschnitt und dem Verbinderkörper verhindert, wobei die Verbindung zum Zusammenbauen durch Aufpressen und ohne Kopf konfiguriert ist.

3. Klimaanlagensystem nach Anspruch 2, wobei der Verbinderkörper ferner einen erhöhten Dichtungsrand 38 auf einer Außenseite des Verbinderkörpers zum Maximieren von Druck von der Verbindermutter 16 hin zum Rohrleitungseinsatz 14 umfasst.

4. Klimaanlagensystem nach Anspruch 1, wobei die mit Gewinde versehenen Öffnungen der Y-Verbindernaben verschiedene Größen aufweisen, um verschieden große mit Gewinde versehene Nabenverbinder 28 aufzunehmen.

5. Klimaanlagensystem nach Anspruch 1, wobei die Rohrleitungsverbinder an dem ersten Ende 18 und dem zweiten Ende 20 jeweils einen verschieden großen Verbinderkörper aufweisen.

6. Klimaanlagensystem nach Anspruch 2, wobei die Pressverbindungs-Verbinderkörperenden ferner einen Werkzeugeingriffsrand 22 umfassen, der konfiguriert ist, dabei zu assistieren, dass ein Werkzeug die Verbindermutter 16 auf den Verbinderkörper schiebt.

7. Klimaanlagensystem nach Anspruch 2, wobei die Y-Verbindernabe, die Rohrleitungseinsätze 14 und die Verbinder aus Stahl gefertigt sind und die Rohrleitungsabschnitte aus Aluminium gefertigt sind.

8. Klimaanlagensystem nach Anspruch 2, wobei der Rohrleitungseinsatz 14 ferner eine nach außen weisende Lippe umfasst, die verhindert, dass der Rohrleitungseinsatz 42 in das Ende des Rohrleitungsabschnitts hineingleitet.

9. Klimaanlagensystem nach Anspruch 2, wobei die Rohrleitungsabschnitte und die Verbinder aus unterschiedlichen Metallen bestehen können.

10. Klimaanlagensystem nach Anspruch 2, wobei das dielektrische Material eine Schicht 24 aus nichleitendem Material ist, das elektrisch auf dem Verbinder abgelagert und mit dem Verbinderkörper verbunden ist.

11. Klimaanlagensystem nach Anspruch 10, wobei das dielektrische Material ein elektrophoretischer Lack ist.

12. Klimaanlagensystem nach Anspruch 2, wobei die dielektrische Schicht 24 15 bis 25 Mikrometer dick ist.

13. Klimaanlagensystem nach Anspruch 9, wobei das dielektrische Material ein Kunststoff ist.

14. Verfahren zum Ausbilden eines Klimaanlagensystems mit nicht geschweißten Verbindungen, die folgenden Schritte umfassend: Analysieren des Klimaanlagensystems eines Gebäudes zum Bestimmen der erforderlichen Anzahl, Platzierung und Dimensionierung jeder Y-Verbindung 26 in dem System, um eine berechnete Menge von Kältemittel an mehrere verteilte Kühlungseinheiten zu liefern;
Festlegen einer Position jeder Y-Verbindung 26 in dem physischen Gebäude; Aufbauen jeder erforderlichen Y-Verbindung 26 unter Einsatz einer angemessen dimensionierten Y-Verbindernabe 28 mit vorgegebenen Größen von mit Gewinde versehenen Öffnungen;
Befestigen, durch Eindrehen, angemessen dimensionierter Nabenverbinder in die Verbindernabe 28, wobei jeder Nabenverbinder eine dielektrische Schicht 24 innen und außen, ein erstes Pressverbindungsende und ein mit Gewinde versehenes zweites Ende aufweist;
Abtrennen von Abschnitten einer Aluminiumrohrleitung, um eine Kältemittelquelle mit den Y-Verbindungen 26 und den verteilten Kühlungseinheiten zu verbinden;
Ausbilden von Verbindungen zwischen den Aluminium-Rohrleitungsabschnitten 34 und den Y-Verbindungen 26 durch Einführen eines Rohrleitungseinsatzes 14 in ein Ende der Rohrleitungsabschnitte 34, Platzieren einer Verbindermutter 16 an jedem der Enden der Rohrleitungsabschnitte 34, Platzieren des Rohrleitungsendes in einem Verbinderkörper an dem Pressverbindungsende der Verbinder, Aufpressen der Verbindermutter 16 auf den Verbinderkörper, um ohne Wärme eine dichte nicht geschweißte Verbindung auszubilden;
Bestimmen, wo Rohrleitungsbschnitte mit anderen Rohrleitungsabschnitten verbunden werden müssen, einschließlich der Stellen, an denen sich der Rohrleitungsdurchmesser ändert;
Ausbilden von Verbindungen zwischen den Aluminium-Rohrleitungsabschnitten unter Einsatz von Rohrleitungsverbindern, die ohne Wärme leckdichte Verbindungen ausbilden, durch Einführen eines Rohrleitungseinsatzes 14 in ein Ende der Rohrleitungsabschnitte, Platzieren einer Verbindermutter 16 an jedem der Enden der Rohrleitungsabschnitte 34, Platzieren des Rohrleitungsendes in einem Verbinderkörper an dem Pressverbindungsende der Verbinder, Aufpressen der Verbindermutter 16 auf den Verbinderkörper, um ohne Wärme eine dichte nicht geschweißte Verbindung auszubilden.

15. Verfahren zum Ausbilden eines Klimaanlagensystems nach Anspruch 14, wobei der Schritt des Aufpressens der Verbindermuttern 16 auf den Verbinderkörper ferner das Verwenden einer zweiteiligen Presse 56, 72, wobei ein Teil der Presse die Verbindermutter 16 ergreift und eine zweite Seite der Presse einen
Werkzeugeingriffsrand 22 des Verbinders ergreift, sowie das Zusammenpressen von diesen durch Zusammenbewegen der zwei Teile der Presse umfasst.

16. Verfahren zum Ausbilden eines Klimaanlagensystems nach Anspruch 15, wobei die zweiteilige Presse 56 austauschbare gekrümmte Backen 64, 66 zum Zusammenwirken mit verschieden dimensionierten Verbindermuttern 16 und Verbinderkörpern aufweist.

17. Verfahren zum Ausbilden eines Klimaanlagensystems nach Anspruch 15, wobei die zweiteilige Presse 72 dafür konfiguriert ist, dass ein Pressenteil 58 sich um das andere Pressenteil 60 herum dreht, und wobei jedes Pressenteil 58, 60 mehrere Verbinderbacken 74 umfasst, um mit verschieden dimensionierten Verbindermuttern 16 und Verbinderkörpern zusammenzuwirken, damit eine Vielzahl von verschieden großen Verbindern, bei denen sich ein Ende von dem anderen Ende unterscheidet, in die zweiteilige Presse eingesetzt werden und gegen Verbindermuttern 16 gepresst werden können, um leckdichte und nicht geschweißte Verbindungen für Hochdruck-Kältemittelleitungen auszubilden.

## Revendications

1. Système de chauffage, ventilation et climatisation, comprenant :
une pluralité de sections de tubage 34 raccordant une source de fluide frigorigène à une pluralité d'unités de refroidissement réparties ;
**caractérisé par** :
une pluralité de raccords en Y 26 pour fixation auxdites sections de tubage avec chaque raccord en Y comprenant un collet de raccord en Y avec trois ouvertures de collet filetées, et trois raccords de collet 28 pour filetage dans chacune desdites ouvertures de collet filetées, lesdits raccords de collet ayant une conduite diélectrique 24 sur une surface interne et sur une surface externe et un joint emmanché à force sur une première extrémité, et un joint emmanché par filets 40 sur une seconde extrémité, pour fixation auxdites sections de tubage 34 audit collet de raccord en Y ; et
une pluralité de raccords de tubage creux généralement cylindriques 12, 36 avec une couche de revêtement diélectrique 24 sur une surface interne et sur une surface externe, lesdits raccords de tubage 12, 36 comportant un joint emmanché à force sur une première extrémité 18 et un joint emmanché à force sur une seconde extrémité 20, permettant de joindre deux sections de tubage 34 ;
et dans lequel lesdits raccords en Y 26 et lesdits raccords de tubage 12, 36 forment un réseau de sections de tubage pour délivrer et renvoyer des quantités prédéterminées de fluide frigorigène de ladite source de fluide frigorigène auxdites unités de refroidissement réparties, ledit système comprenant des joints emmanchés à force et emmanchés par filets assemblés sans chaleur.

2. Système de chauffage, ventilation et climatisation selon la revendication 1, dans lequel lesdits joints emmanchés à force comprennent en outre un insert de tubage 14 configuré pour un placement à l'intérieur d'une extrémité de ladite section de tubage, lesdits raccords de collet et de tubage comportant un corps de raccord configuré pour un placement sur ladite extrémité de ladite section de tubage, et un écrou de raccord 16 configuré pour une mise en prise par glissement sur ledit corps de raccord, ledit écrou de raccord 16 pressant ladite extrémité de section de tubage entre ledit insert de tubage 14 et ledit corps de raccord, ladite couche de revêtement diélectrique 24 empêchant un contact électrique entre ladite section de tubage et ledit corps de raccord, ledit joint étant configuré pour un assemblage par pressage et sans tête.

3. Système de chauffage, ventilation et climatisation selon la revendication 2, dans lequel ledit corps de raccord comprend en outre une strie d'obturation en relief 38 sur un extérieur dudit corps de raccord, permettant de maximiser la pression allant dudit écrou de raccord 16 audit insert de tubage 14.

4. Système de chauffage, ventilation et climatisation selon la revendication 1, dans lequel lesdites ouvertures filetées desdits collets de raccord en Y sont de tailles différentes pour recevoir des tailles différentes de raccords de collet filetés 28.

5. Système de chauffage, ventilation et climatisation selon la revendication 1, dans lequel lesdits raccords de tubage ont un corps de raccord de taille différente sur ladite première extrémité 18 et ladite seconde extrémité 20.

6. Système de chauffage, ventilation et climatisation selon la revendication 2, dans lequel lesdites extrémités de corps de raccord emmanchées à force comprennent en outre une strie de préhension d'outil 22, configurée pour prêter assistance à un outil dans le pressage dudit écrou de raccord 16 sur ledit corps de raccord.

7. Système de chauffage, ventilation et climatisation selon la revendication 2, dans lequel ledit collet de raccord en Y, lesdits inserts de tubage 14 et lesdits raccords sont constitués d'acier, et lesdites sections de tubage sont constituées d'aluminium.

8. Système de chauffage, ventilation et climatisation selon la revendication 2, dans lequel ledit insert de tubage 14 comprend en outre une lèvre tournée vers l'extérieur, qui empêche ledit insert de tubage 42 de glisser à l'intérieur de ladite extrémité de la section de tubage.

9. Système de chauffage, ventilation et climatisation selon la revendication 2, dans lequel lesdites sections de tubage et lesdits raccords peuvent être en métaux dissemblables.

10. Système de chauffage, ventilation et climatisation selon la revendication 2, dans lequel ledit matériau diélectrique est une couche 24 de matériau non conducteur électriquement déposé sur ledit raccord et lié audit corps de raccord.

11. Système de chauffage, ventilation et climatisation selon la revendication 10, dans lequel ledit matériau diélectrique est une peinture électrophorétique.

12. Système de chauffage, ventilation et climatisation selon la revendication 2, dans lequel ladite couche diélectrique 24 a une épaisseur de 15 à 25 microns.

13. Système de chauffage, ventilation et climatisation selon la revendication 9, dans laquelle ledit matériau diélectrique est un plastique.

14. Procédé de formation d'un système de chauffage, ventilation et climatisation avec des joints sans soudure, comprenant les étapes consistant à :
analyser un système de chauffage, ventilation et climatisation de bâtiment pour déterminer le nombre, le placement et le dimensionnement requis de chaque raccord en Y 26 dans le système, pour délivrer une quantité calculée de fluide frigorigène à une pluralité d'unités de refroidissement réparties ;
établir une position de chaque raccord en Y 26 dans le bâtiment physique ;
construire chaque raccord en Y 26 exigé en utilisant un collet de raccord en Y 28 de dimension appropriée, avec des tailles prédéterminées d'ouvertures filetées ;
fixer par filetage des raccords de collet de dimension appropriée dans ledit collet de raccord 28, chaque raccord de collet ayant une couche diélectrique 24 à l'intérieur et à l'extérieur, et une première extrémité emmanchée à force et une seconde extrémité filetée ;
découper des sections de tubage en aluminium pour raccorder une source de fluide frigorigène auxdits raccords en Y 26 et auxdites unités de refroidissement réparties ;
former des joints entre lesdites sections de tubage en aluminium 34 et lesdits raccords en Y 26 par insertion d'un insert de tubage 14 dans une extrémité desdites sections de tubage 34, placer un écrou de raccord 16 sur chacune de ladite extrémité de sections de tubage 34, placer ladite extrémité de tubage dans un corps de raccord sur ladite extrémité emmanchée à force desdits raccords, presser ledit écrou de raccord 16 sur ledit corps de raccord pour former un joint sans soudure étanche sans chaleur ;
déterminer des endroits où des sections de tubage ont besoin d'être raccordées à d'autres sections de tubage, y compris des endroits où le diamètre de tubage change ;
former des joints entre lesdites sections de tubage en aluminium par l'utilisation de raccords de tubage qui forment des joints étanches aux fuites sans chaleur, par insertion d'un insert de tubage 14 dans une extrémité desdites sections de tubage, placer un écrou de raccord 16 sur chacune de ladite extrémité de sections de tubage 34, placer ladite extrémité de tubage dans un corps de raccord sur ladite extrémité emmanchée à force desdits raccords, presser ledit écrou de raccord 16 sur ledit corps de raccord pour former un joint sans soudure étanche sans chaleur.

15. Procédé de formation d'un système de chauffage, ventilation et climatisation selon la revendication 14, dans lequel l'étape de pressage desdits écrous de raccord 16 sur ledit corps de raccord comprend en outre l'utilisation d'une presse à deux pièces 56, 72, une pièce de ladite presse saisissant ledit écrou de raccord 16, et un second côté de ladite presse saisissant une strie de préhension d'outil 22 dudit raccord, et leur pressage ensemble par déplacement conjoint des deux pièces de ladite presse.

16. Procédé de formation d'un système de chauffage, ventilation et climatisation selon la revendication 15, dans lequel ladite presse à deux pièces 56 comporte des mâchoires incurvées remplaçables 64, 66 pour mise en prise avec des écrous de raccord 16 et des corps de raccord de taille différente.

17. Procédé de formation d'un système de chauffage, ventilation et climatisation selon la revendication 15, dans lequel ladite presse à deux pièces 72 est configurée pour qu'une pièce de presse 58 tourne autour de l'autre pièce de presse 60, et avec chaque pièce de presse 58, 60 pour comprendre de multiples mâchoires de raccord 74 pour une mise en prise avec des écrous de raccord 16 et des corps de raccord de taille différente, de sorte qu'une variété de raccords de taille différente avec une extrémité différente de l'autre extrémité, peuvent être emmanchés dans la presse à deux pièces et pressés à nouveau des écrous de raccord 16 pour former des joints étanches aux fuites et sans soudure pour des conduites de fluide frigorigène haute pression.
